# FASCICULE DE BREVET EUROPEEN

(11) **EP 0 867 476 B1**
(45) Date de publication et mention de la délivrance du brevet: **07.12.2005**
(21) Numéro de dépôt: 98400590.0
(22) Date de dépôt: 12.03.1998
(51) Int. Cl.: C08L 101/00

(54) **Mélange de polymères thermoplastiques présentant des propriétés mécaniques améliorées**
Mischung von Thermoplasten mit verbesserten Eigenschaften
Mixture of thermoplastic polymers with improved mechanical properties

(30) Priorité: 24.03.1997 FR 9703555
(43) Date de publication de la demande: 30.09.1998
(73) Titulaire: Institut Français du Pétrole, 92500 Rueil Malmaison (FR)
(72) Inventeur: Gamberlin, Yves, 69300 Caluire (FR); Gonzales, Serge, 69150 Decines (FR); Hauviller, Frédérique, 69230 Saint Genis Laval (FR)

(56) Documents cités:
- EP-A- 0 337 814
- DE-A- 4 342 605
- US-A- 5 466 753
- DATABASE WPI Section Ch, Week 9618 Derwent Publications Ltd., London, GB; Class A18, AN 96-175787 XP002046867 & JP 08 053 591 A (HITACHI CHEM CO LTD) , 27 février 1996

## Description

L'invention est relative à une composition de polymères constituée d'une polyoléfine modifiée et d'un polymère comportant au moins une fonction réactive, permettant la fabrication dans des matériels de transformation conventionnels de tubes ou de récipients présentant en particulier des propriétés mécaniques améliorées.

L'invention à également pour objet des mélanges de polymères contenant une composition selon l'invention comme agent compatibilisant pour des polymères incompatibles.

Il a été décrit dans l'art antérieur, par exemple dans le document de brevet US-A-3 373 222, des compositions de polymères contenant en particulier une polyoléfine et un polyamide, qui ont en présence d'un copolymère à base d'éthylène et d'acide acrylique ou méthacrylique des propriétés mécaniques supérieures à celles des mélanges polyéthylène-polyamide préparés en l'absence de copolymère éthylène-acide acrylique (ou méthacrylique). Les procédés de mise en oeuvre des compositions ainsi constituées sont l'extrusion ou l'extrusion-soufflage.

Dans le document de brevet EP-A-15 556, il est décrit un procédé de fabrication d'objets ayant une structure lamellaire dispersée avec des compositions contenant une polyoléfine, un second polymère de type polyamide incompatible avec la polyoléfine et un copolymère d'éthylène contenant des groupements acides, anhydrides ou esters, soit dans la chaîne principale, soit sous forme greffons (de chaînons pendants). Dans ce cas, le mélange est décrit comme hétérogène, avec une phase continue polyoléfinique et une phase dispersée polyamide sous forme de lamelles orientées dans le plan de la paroi de l'objet. Cette orientation est obtenue par un étirement important (100 à 500%) dans deux directions de l'espace, de la phase polymère à chaud, suivi d'une trempe. L'épaisseur des lamelles de polyamide ainsi obtenues est comprise entre 0,5 et 50·10⁻⁶ mètre (voir en particulier les documents de brevets EP-A-95 349 et 90 554).

Dans ce type de composition, l'agent utilisé pour améliorer les propriétés mécaniques du mélange obtenu est généralement un copolymère d'éthylène et d'acide organique de type acide fumarique ou adipique (voir en particulier les documents de brevets EP-A-95 349, 90 554 et 15 556), ainsi que d'acide acrylique ou d'anhydride maléique (voir en particulier les documents de brevets US-A-3 373 222, 3 373 223, 3 373 224 et 4 444 817).

On connaît également des compositions de polyamide associé à des copolymères ou terpolymères à base d'éthylène, d'ester acrylique ou méthacrylique et d'acide acrylique ou méthacrylique ou d'anhydride maléique. La présence des copolymères ou terpolymères dispersés sous forme nodulaire dans une phase continue polyamide confère à cette dernière une résistance à l'impact améliorée (voir en particulier le document de brevet DE-A-2 551 023).

Les références précédentes, représentatives de l'état actuel des développements industriels dans le domaine des alliages de résines thermoplastiques en général et des mélanges polyéthylène-polyamide en particulier, font apparaître l'intérêt de l'utilisation de copolymères, c'est-à-dire de polymères composés de deux monomères différents, comme agents favorisant l'adhérence entre les deux phases constituées des deux polymères incompatibles. Or, on a maintenant découvert, de manière surprenante, que l'incorporation de certains polymères modifiés, dans des compositions et/ou des mélanges de polymères incompatibles permettait d'obtenir une amélioration sensible des propriétés physico-chimiques et mécaniques de la composition obtenue par comparaison avec les mélanges binaires.

Les compositions de l'invention peuvent être définies d'une manière générale comme des compositions de polymères thermoplastiques contenant au moins deux polymères distincts, c'est-à-dire au moins un polymère P1 comportant au moins une fonction réactive et au moins une polyoléfine P2 modifiée contenant au moins un cycle succinimide substitué sur l'azote par un groupement réactif, ledit cycle étant supporté soit par la chaîne principale, soit par une chaîne latérale.

Des compositions particulières rentrant dans le cadre de la présente invention comprendront au moins un troisième polymère P3 choisi dans le groupe formé par les polymères et les copolymères obtenus par polymérisation d'un ou plusieurs composés oléfiniques. Dans une forme préférée de réalisation, ce troisième polymère est une polyoléfine. Cette polyoléfine est habituellement choisie dans le groupe formé par les polyoléfines obtenues à partir d'au moins un monomère insaturé choisi dans le groupe formé par les composés comportant une ou plusieurs insaturations et de préférence choisie dans le groupe formé par l'éthylène, le propène, les butènes et les norbornènes. Parmi ces polyoléfines, on peut citer les polyéthylènes, les polypropylènes, les polybutylènes et les copolymères de ces composés. On utilise le plus souvent des polyéthylènes ou des copolymères d'éthylène constitués d'au moins 90 % d'éthylène et d'au plus 10 % d'une oléfine en C3 à C8. On utilise en particulier du polyéthylène désigné par les hommes du métier par le terme «polyéthylène haute densité» ayant de préférence une densité d'environ 0,9 à environ 0,97 et un indice de fusion mesuré selon la norme ASTM D 1238 d'environ 0,2 à environ 100 (mesure effectuée sous 19,6 kg à 190 °C).

Le polymère P1 comportant au moins une fonction réactive est habituellement un polymère choisi dans le groupe formé par les polyesters, les polymères à cristaux liquides, les polycarbonates, les polyamides, les copolyamides, les polyuréthannes, les polyacétals, les alcools polyvinyliques, les copolymères éthylène-alcool vinylique, les copolymères d'oléfines et de dérivés vinyliques fonctionnalisés, tels que par exemple les copolymères éthylène-acide acrylique. On utilise souvent comme polymère à fonction réactive les polyesters et les polyamides et de préférence les polyesters. Parmi les polyesters que l'on utilise dans le cadre de la présente invention, on peut citer les homopolyesters et les copolyesters. Ces polyesters sont habituellement obtenus par polycondensation d'au moins un composé comportant au moins deux fonctions acides carboxyliques avec au moins un composé comportant deux fonctions hydroxyle, ou par polycondensation d'au moins un composé comportant au moins une fonction hydroxyle et au moins une fonction acide carboxylique, ou par polycondensation d'au moins un composé de chacune de ces catégories. Sans vouloir être limitatif, on peut citer à titre d'exemples de diacides utilisables pour former les polyesters l'acide téréphtalique, l'acide isophtalique, les acides naphtalènedicarboxyliques, les acides diphényldicarboxyliques, les acides diphénylétherdicarboxyliques, les acides diphényléthanedicarboxyliques les acides cyclohexanedicarboxyliques, les acides adipique, subérique, sébacique, azélaïque, malonique, glutarique et pimélique, chacun de ces acides pouvant comporter des substituants alkyl, alkoxy ou halogènes. Sans vouloir être limitatif, on peut citer à titre d'exemples de composés dihydroxylés utilisables pour former les polyesters l'éthylèneglycol, les propylèneglycols, les butanediols, le néopentylglycol, l'hydroquinone, le résorcinol, les naphtalènediols, les dihydroxydiphényléthers, les cyclohexanediols, les bishydroxyphényl alcanes, dont le 2,2-bis(4-hydroxyphényl)-propane (bis-phénol-A), les polyoxyalkylèneglycols et les dérivés substitués de ces composés par un ou plusieurs groupes alkyl, alkoxy ou halogènes. Sans vouloir être limitatif, on peut citer à titre d'exemples de composés hydroxycarboxyliques utilisables pour former les polyesters les acides hydroxybenzoiques, les acides hydroxynaphtoiques, et les dérivés substitués de ces composés par un ou plusieurs groupes alkyl, alkoxy ou halogènes. Parmi les polyesters, on préfère le plus souvent employer des polyesters comportant des fonctions esters liées à un cycle aromatique et en particulier le polybutylène téréphtalate. Parmi les polyamides et les copolyamides que l'on utilise dans le cadre de la présente invention, on peut citer ceux qui sont obtenus par des réactions bien connues d'un diacide sur une diamine ou d'un aminoacide ou d'un lactame sur lui-même. On peut citer par exemple comme acides carboxyliques, l'acide téréphtalique, l'acide isophtalique, les acides naphtalènedicarboxyliques, les acides diphényldicarboxyliques, les acides diphénylétherdicarboxyliques, les acides diphényléthanedicarboxyliques les acides cyclohexanedicarboxyliques, les acides adipique, subérique, sébacique, azélaïque, malonique, glutarique et pimélique et comme amines primaires, les tétraméthylène-diamine, pentaméthylène-diamine, hexaméthylène-diamine, octaméthylène-diamine ; comme lactames et aminoacides, on peut citer par exemple le caprolactame (pour former le polyamide 6) et l'acide amino-undécanoique (pour former le polyamide 11). Les polyamides considérés plus particulièrement sont par exemple les polyamides 4 à 12 et les polyamides 6-6, 5-6, 4-10, 5-10, 6-10. On utilisera de préférence les polyamides 6 et 11.

La polyoléfine modifiée entrant dans les compositions de la présente invention peut être définie comme étant le produit résultant de la réaction d'au moins une polyoléfine, d'au moins un composé comportant un cycle maléimide substitué sur l'azote par un groupement réactif de formule -R-(X)_{n,} dans laquelle X représente un groupement réactif, n un nombre entier positif égal ou supérieur à 1 et R est un reste comportant au moins un atome de carbone, et d'au moins un polyépoxyde contenant dans sa molécule au moins deux groupes époxydes. Le plus souvent n est égal à 1 et dans ce cas le composé comportant un cycle maléimide utilisé dans le cadre de la présente invention est représenté par la formule (I) ci-après :

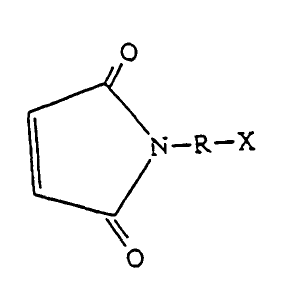

Le groupe réactif -X est habituellement choisi parmi le groupe hydroxyle, un groupe carboxylique, un groupe carboxamide, un groupe halogénure d'acide carboxylique, un groupe thiol, un groupe thiocarboxylique, un groupe amino, un halogène, un groupe époxy, un groupe carboxylique estérifié dont la partie ester comporte un groupe réactif. Dans le cas où plusieurs groupes -X sont présents, ils peuvent être identiques entre eux ou différents.

On utilise très souvent des composés comportant un groupe réactif choisi parmi le groupe carboxylique, le groupe carboxamide, un groupe halogénure d'acide et par exemple un groupe chlorure d'acide carboxylique. Le groupe préféré est le groupe carboxylique.

Le groupe -R- est habituellement choisi parmi les groupes hydrocarbonés aliphatiques, saturés ou insaturés, substitués ou non, les groupes aromatiques substitués ou non substitués. On préfère généralement des groupes non substitués et le plus souvent des groupes comportant au moins un noyau aromatique. A titre d'exemples de groupes que l'on trouve très fréquemment, on peut citer les groupes benzéniques reliés en ortho, méta ou para, d'une part à l'atome d'azote et d'autre part au groupe réactif -X. On utilise le plus souvent la forme liée en para ou celle liée en méta.

Les polyoléfines utilisées pour fabriquer les polyoléfines modifiées employées dans le cadre de la présente invention peuvent être n'importe quelles polyoléfines bien connues des hommes du métier. On utilisera de préférence des polyoléfines obtenues à partir d'au moins un monomère insaturé comportant une ou plusieurs insaturations, le plus souvent choisi dans le groupe formé par l'éthylène, le propène, les butènes et les norbornènes. Ainsi, ces polyoléfines peuvent-elles être formées par homopolymérisation ou copolymérisation d'au moins deux monomères.

Dans une forme particulièrement préférée, la polyoléfine sera choisie dans le groupe formé par les polyéthylènes haute densité et les copolymères d'éthylène constitués de préférence d'au moins 90 % d'éthylène et d'au plus 10% d'une oléfine en C3 à C8. On utilisera plus particulièrement les polyéthylènes haute densité ayant de préférence une densité d'environ 0,90 à environ 0,97 et un indice de fusion mesuré selon la norme ASTM D-1238 d'environ 0,2 à environ 100 (mesure effectuée sous 19,6 kg à 190 °C).

Le polyépoxyde contenant dans sa molécule au moins deux groupes époxydes est le plus souvent choisi dans le groupe formé par les polyépoxydes aliphatiques, les polyépoxydes cycloaliphatiques et les polyépoxydes aromatiques. A titre d'exemples de composés très souvent employés, on peut citer le diglycidyléther du bis-phénol-A ou celui du bis-phénol-F, le triglycidyléther-isocyanurate et/ou le tri-glycidyléther-cyanurate et/ou le triglycidyl-cyanurate et/ou le triglycidyl-isocyanurate ou les mélanges d'au moins deux de ces composés. Les composés époxydés comprenant au moins deux groupes époxydes cités dans le brevet US-A-4 921 047 sont également utilisables dans le cadre de la présente invention. L'enseignement de ce brevet doit être considéré comme partie intégrante de la présente description du seul fait de sa mention. On peut aussi avantageusement utiliser des polyépoxydes substitués par des atomes d'halogènes et en particulier par du chlore et/ou du brome.

Les polyoléfines modifiées employées dans le cadre de la présente invention sont habituellement préparées par deux méthodes distinctes. La première méthode consiste en la mise en contact de la polyoléfine à l'état fondu avec au moins un composé comportant un cycle maléimide substitué sur l'azote par un groupement réactif et au moins un composé contenant dans sa molécule au moins deux groupes époxydes au sein d'un mélangeur ou dans une extrudeuse de manière à former un produit P4 qui correspond à l'oléfine modifiée que l'on utilise pour fabriquer les compositions de la présente invention. Cette préparation peut être effectuée avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain qui permet d'éviter les risques de coupures et les risques de réticulation du polymère. La température de la réaction est habituellement comprise entre environ la température de fusion de la polyoléfine et environ 300 °C. Le plus souvent cette température est d'environ 200 °C à environ 260 °C. La durée de la réaction est relativement faible et ne dépasse pas habituellement 10 minutes. On préfère habituellement utiliser le système par extrusion-réaction, qui donne de très bons résultats.

La deuxième méthode de préparation des polyoléfines modifiées (produit P4) employées dans le cadre de la présente invention consiste, dans une étape a1), en la mise en contact de la polyoléfine à l'état fondu avec au moins un composé comportant un cycle maléimide substitué sur l'azote par un groupement réactif au sein d'un mélangeur ou dans une extrudeuse, puis, dans une étape a2), en l'introduction au sein du mélangeur ou dans l'extrudeuse d'au moins un composé contenant dans sa molécule au moins deux groupes époxydes. Cette préparation peut être effectuée avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain qui permet d'éviter les risques de coupures et les risques de réticulation du polymère. La température de la réaction dans l'étape a1) comme dans l'étape a2) est habituellement comprise entre environ la température de fusion de la polyoléfine et environ 300 °C. Le plus souvent cette température est d'environ 200 °C à environ 260 °C. La durée de la réaction est relativement faible et ne dépasse pas habituellement 10 minutes pour chacune des étapes. On préfère habituellement utiliser le système par extrusion-réaction, qui donne de très bons résultats. La température est le plus souvent identique dans les deux étapes.

Les compositions selon l'invention peuvent ainsi être préparées selon deux méthodes distinctes. La première méthode consiste à mettre en contact une polyoléfine à l'état fondu, au moins un polymère comportant au moins une fonction réactive, au moins un composé comportant un cycle maléimide substitué sur l'azote par un groupement réactif et au moins un polyépoxyde contenant dans sa molécule au moins deux groupes époxydes au sein d'un mélangeur ou dans une extrudeuse. La température de la mise en contact est habituellement comprise entre environ la température de fusion du polymère fondant le plus haut entrant dans la composition et environ 300 °C. Le plus souvent cette température est d'environ 200 °C à environ 260 °C. La durée de la réaction est relativement faible et ne dépasse pas habituellement 10 minutes. On préfère habituellement utiliser le système par extrusion-réaction, qui donne de très bons résultats.

La deuxième méthode consiste à mettre en contact au sein d'un mélangeur ou dans une extrudeuse le produit P4 avec au moins un polymère à fonction réactive tel que défini ci-avant. La température de la mise en contact est habituellement comprise entre environ la température de fusion du produit P4 ou du polymère fondant le plus haut entrant dans la composition et environ 300 °C. Le plus souvent cette température est d'environ 200 °C à environ 260 °C. La durée de la réaction est relativement faible et ne dépasse pas habituellement 10 minutes. On préfère habituellement utiliser le système par extrusion-réaction, qui donne de très bons résultats.

La présente invention à également pour objet des mélanges de polymères comprenant au moins l'une des compositions décrites ci-avant et au moins un polymère P5, identique ou différent du polymère P3, choisi habituellement dans le groupe formé par les polymères et les copolymères obtenus par polymérisation d'un ou plusieurs composés oléfiniques. Selon une forme préférée de l'invention le polymère P5 est une polyoléfine habituellement choisie parmi les polyoléfines citées ci-avant. On utilisera par exemple une polyoléfine choisie dans le groupe formé par les polyoléfines obtenues à partir d'au moins un monomère insaturé choisi dans le groupe formé par les composés comportant une ou plusieurs insaturations et de préférence choisi dans le groupe formé par l'éthylène, le propène, les butènes et les norbornènes. On utilisera très avantageusement une polyoléfine haute densité choisie parmi celles citées ci-avant.

La présente invention à également pour objet des mélanges de polymères comprenant au moins l'une des compositions décrites ci-avant et au moins un polymère P6, identique ou différent du polymère P1, comportant au moins une fonction réactive choisi habituellement parmi les polymères à fonction réactive cités ci-avant. Selon une forme préférée de l'invention le polymère P6 est choisi dans le groupe formé par les polyesters, les polymères à cristaux liquides, les polycarbonates, les polyamides, les polyacétals, les alcools polyvinyliques, les copolymères éthylène-alcool polyvinylique, les copolymères d'oléfines et de dérivés vinyliques fonctionnalisés. On utilise le plus souvent un polymère P6 choisi dans le groupe formé par les polyesters et les polyamides tels que par exemple l'un de ceux mentionnés ci-avant. Dans une forme particulièrement préférée on utilisera un polyester.

La présente invention concerne aussi des mélanges de polymères comprenant au moins l'une des compositions décrites ci-avant, au moins un polymère P5, identique ou différent du polymère P3, et au moins un polymère P6, identique ou différent du polymère P1.

La proportion de polyoléfine modifiée P2 entrant dans les compositions ou dans les mélanges selon l'invention est habituellement d'environ 0,01 % à environ 99 % en poids. Cette proportion est souvent d'environ 0,1 % à environ 90 % en poids et le plus souvent d'environ 0,2 % à environ 75 % en poids. Dans le cas de compositions ne contenant que les polymères P1 et P2, la quantité de P1 est le complément à 100 % en poids par rapport à la quantité de P2 employée. Lorsque la composition (ou les mélanges) comprend en outre au moins un autre polymère P3 ou au moins deux autres polymères P3 et P5, la quantité de ce polymère P3 ou de la somme des polymères P3 et P5 est habituellement d'environ 1 % à environ 95 % en poids et souvent d'environ 5 % à environ 90 % en poids et la quantité du polymère P1 est d'environ 1 % et 75 % et souvent d'environ 5 % à environ 60 %. Lorsque la composition (ou les mélanges) comprend en outre au moins un autre polymère P6, la quantité de ce polymère P6 ou de la somme des polymères P1 et P6 est habituellement d'environ 1 % à environ 75 % en poids et souvent d'environ 5 % à environ 60 %. Lorsque la composition (ou les mélanges) comprend en outre au moins un autre polymère P3 et au moins deux autres polymères P5 et P6, la quantité de ce polymère P3 ou de la somme des polymères P3 et P5 est habituellement d'environ 1 % à environ 95 % en poids et souvent d'environ 5 % à environ 90 % en poids et la quantité de ce polymère P6 ou de la somme des polymères P1 et P6 est habituellement d'environ 1 % à environ 75 % en poids et souvent d'environ 5 % à environ 60 %. Dans tous les cas, la somme des quantités de polymères présents dans la composition ou dans les mélanges selon l'invention est égale à 100 % en poids.

Les exemples suivants illustrent l'invention sans en limiter la portée.

### Exemple 1

Dans cet exemple, on décrit la préparation d'une composition de polymères selon l'invention en utilisant une extrudeuse corotative bi-vis CLEXTRAL vendue sous la référence BC21, dont le rapport longueur sur diamètre est de 28. Les vis ont un diamètre de 25 millimètres (mm) et l'extrudeuse est équipée d'une filière dont le diamètre est de 4 mm.

On introduit dans la trémie d'alimentation un mélange, réalisé au tonneau, de granulés composé de 70 pour cent (%) en poids de polyéthylène (PE) commercialisé par la société FINA sous la référence FINATHÈNE 3802® et de 30 % en poids de polybutylène téréphtalate (PBT) commercialisé par la société GENERAL ELECTRIC PLASTICS sous la référence VALOX 325®. Le débit de granulés introduits dans l'extrudeuse est de 5 kilogrammes par heure (kg/h).

On introduit simultanément dans la trémie d'alimentation de la machine par l'intermédiaire d'un doseur de poudre K-TRON vendu sous la référence KM-T20®, un mélange équimolaire d'acide 4 maléimido-benzoïque (AMB) et d'ARALDITE GT 7071®, commercialisé par la société CIBA-GEIGY, dont l'indice d'époxyde est de 2. Le débit de poudre est de 0.2 kg/h.

Le débit total de produits introduit dans l'extrudeuse est de 5,2 kg/h. La température au sein de l'extrudeuse est maintenue à 240 °C, la vitesse de rotation des vis est de 100 tours par minute (tr/min) le temps de séjour est de 1 minute. Le jonc qui sort de la filière est refroidi dans de l'eau à 25 °C. Il est granulé et séché.

### Exemple 2

Cet exemple est un exemple comparatif dans lequel on prépare un mélange de PE et de PBT. On reprend la procédure décrite dans l'exemple 1 mais on introduit dans l'extrudeuse uniquement le mélange de granulés PE (70 % en poids) PBT (30 % en poids). La température de travail est de 240 °C. Le débit de granulés est de 5 kg/h et la vitesse des vis est de 100 tr/min. Le jonc qui sort de la filière est refroidi dans de l'eau à 25 °C. Il est granulé et séché.

### Exemple 3

Dans cet exemple, on décrit la préparation d'un mélange de polymères selon l'invention. On reprend la procédure décrite dans l'exemple 1 mais on introduit dans l'extrudeuse un mélange, réalisé au tonneau, de granulés composé de 64 % en poids de PE, 27 % en poids de PBT et de 9 % en poids de la composition préparée dans l'exemple 1. La température de travail est de 240 °C. Le débit de granulés est de 5 kg/h et la vitesse des vis est de 100 tr/min. Le jonc qui sort de la filière est refroidi dans de l'eau à 25 °C. Il est granulé et séché.

### Exemple 4

Dans cet exemple, on décrit la préparation d'un mélange de polymères selon l'invention. On reprend la procédure décrite dans l'exemple 1 mais on introduit dans l'extrudeuse un mélange, réalisé au tonneau, de granulés composé de 64 % en poids de PE, 27 % en poids de PBT et de 9 % en poids du mélange préparé dans l'exemple 3. La température de travail est de 240 °C. Le débit de granulés est de 5 kg/h et la vitesse des vis est de 100 tr/min. Le jonc qui sort de la filière est refroidi dans de l'eau à 25 °C. Il est granulé et séché.

### Exemple 5

Dans cet exemple, on décrit la préparation d'une polyoléfine modifiée (produit P2) en vue de son utilisation pour la préparation de compositions de selon la présente invention. On reprend la procédure décrite dans l'exemple 1 mais on introduit dans l'extrudeuse un mélange de PE et de poudre comprenant un mélange équimolaire d'AMB et d'ARALDITE GT 7071®. Le débit de produits introduits dans l'extrudeuse est de 5,28 kg/h dont 5 kg/h de PE et 0,28 kg/h du mélange AMB-ARALDITE® et la vitesse des vis est de 100 tr/min. Le jonc qui sort de la filière est refroidi dans de l'eau à 25 °C. Il est granulé et séché.

### Exemple 6

Dans cet exemple, on décrit la préparation d'une composition de polymères selon l'invention. On reprend la procédure décrite dans l'exemple 1 mais on introduit dans l'extrudeuse un mélange, réalisé au tonneau, de granulés composé de 60 % en poids de PE, 30 % en poids de Polyamide 6 (PA6) commercialisé par la société ELF ATOCHEM sous la référence ORGAMIDE REINO® de masse moléculaire moyenne en nombre de 31 200 grammes par mole, et 10 % en poids du produit P2 préparé dans l'exemple 5. La température de travail est de 240 °C. Le débit de granulés est de 5 kg/h et la vitesse des vis est de 100 tr/min. Le jonc qui sort de la filière est refroidi dans de l'eau à 25 °C. Il est granulé et séché.

### Exemple 7

Cet exemple est un exemple comparatif dans lequel on prépare un mélange de PE et de PA6. On reprend la procédure décrite dans l'exemple 1 mais on introduit dans l'extrudeuse uniquement le mélange de granulés PE (70 % en poids) PA6 (30 % en poids). La température de travail est de 240 °C. Le débit de granulés est de 5 kg/h et la vitesse des vis est de 100 tr/min. Le jonc qui sort de la filière est refroidi dans de l'eau à 25 °C. Il est granulé et séché.

### Exemple 8

Dans cet exemple, on décrit la préparation d'un mélange de polymères selon l'invention. On reprend la procédure décrite dans l'exemple 1 mais on introduit dans l'extrudeuse un mélange, réalisé au tonneau, de granulés composé de 65 % en poids de PE, 28 % en poids de PA6 et 7 % en poids de produit préparé dans l'exemple 6. La température de travail est de 240 °C. Le débit de granulés est de 5 kg/h et la vitesse des vis est de 100 tr/min. Le jonc qui sort de la filière est refroidi dans de l'eau à 25 °C. Il est granulé et séché.

### Exemple 9

Dans cet exemple, on prépare à partir des diverses compositions ou mélanges obtenus dans les exemples précédents des éprouvettes qui seront utilisées pour la détermination des propriétés mécaniques de ces mélanges ou compositions de polymères. La réalisation des éprouvettes est effectuée à l'aide d'une presse à injection de type BILLION d'une force de fermeture de 900 kilonewton équipée d'une vis de diamètre de 38 mm. Le moule «deux empreintes» est maintenu à une température de 20 °C. Les éprouvettes de type A réalisées satisfont à la norme ISO 3167. Le tableau 1 ci-après donne les conditions de formation des éprouvettes.

**Tableau 1**

| Exemple n° | Température matière (°C) | Pression de commutation (bar*) | Vitesse de la vis (tr/min) |
|---|---|---|---|
| 1 | 237 | 120 | 150 |
| 2 | 238 | 120 | 150 |
| 3 | 236 | 120 | 150 |
| 4 | 237 | 120 | 150 |
| 6 | 243 | 141 | 80 |
| 7 | 244 | 126 | 80 |
| 8 | 244 | 130 | 80 |

| | | | |
|---|---|---|---|
| * 1 bar est égal à 0,1 MPa. | | | |

### Exemple 10

Dans cet exemple, on détermine la résistance aux chocs de certaines éprouvettes formées dans l'exemple 9. L'essai est réalisé selon méthode CHOC CHARPY suivant la norme ISO 179/1eA. L'énergie du pendule est de 4 Joules, la distance entre appuis est de 62 mm, les mesures sont relevées à 23 °C et 50 % d'humidité relative. Les valeurs sont notées dans le tableau 2 ci-après :

**Tableau 2**

| Exemple n° | Énergie (J) | Résistance (kJ/m²) |
|---|---|---|
| 2 | 0,3 | 9,99 |
| 3 | 0,34 | 11,03 |
| 4 | 0,31 | 10,33 |
| 7 | 0,98 | 32 |
| 8 | 1,2 | 40,03 |

Les résultats montrent que les compositions ou les mélanges selon l'invention ont une meilleure résistance aux chocs que les mélanges de polymères de comparaison (éprouvettes obtenues à partir des produits préparés dans les exemples 2 et 7).

### Exemple 11

Dans cet exemple, on détermine la résistance à la traction de certaines éprouvettes formées dans l'exemple 9. On réalise un test de traction sur une machine type INSTRON 1175 équipée d'une tête de mesure de 10⁵ Newton. La valeur du module d'élasticité est donnée pour une vitesse de déplacement de la traverse de 1 mm/min. Les autres valeurs sont données pour une vitesse de déplacement de la traverse de 10 mm/min. Les valeurs mesurées sont notées dans le tableau 3 ci-après.

**Tableau 3**

| Exemple n° | Module d'élasticité (MPa) | Contrainte à la rupture (MPa) | Déformation à la rupture (%) |
|---|---|---|---|
| 1 | 746 | 12,5 | 55 |
| 2 | 651 | 11 | 54 |
| 3 | 673 | 11,1 | 65 |
| 4 | 651 | 12 | 59 |
| 6 | 681 | 23,4 | 61,1 |
| 7 | 680 | 21,6 | 18,4 |
| 8 | 686 | 23,4 | 26,1 |

Les résultats montrent que les compositions ou les mélanges selon l'invention ont de meilleures propriétés mécanique que les mélanges de polymères de comparaison (éprouvettes obtenues à partir des produits préparés dans les exemples 2 et 7).

Les exemples qui précèdent peuvent être répétés avec des résultats analogues en substituant les réactifs et/ou les conditions générales ou particulières décrites dans l'invention à ceux mis en oeuvre dans ces exemples.

## Revendications

1. Composition de polymères thermoplastiques contenant au moins deux polymères distincts **caractérisée en ce qu'**elle comprend :
- au moins un polymère P1 comportant au moins une fonction réactive choisi dans le groupe formé par les polyesters, les polymères à cristaux liquides, les polycarbonates, les polyamides, les copolyamides, les polyuréthannes, les polyacétals, les alcools polyvinyliques, les copolymères éthylène - alcool vinylique, les copolymères d'oléfines et de dérivés vinyliques fonctionnalisés,
- et au moins une polyoléfine P2 modifiée contenant au moins un cycle succinimide substitué sur l'azote par un groupement réactif, ledit cycle étant supporté soit par la chaîne principale, soit par une chaîne latérale, ladite polyoléfine modifiée résultant de la réaction :
· d'au moins une polyoléfine,
· d'au moins un composé comportant un cycle maléimide substitué sur l'azote par un groupement réactif de formule -R-(X)ₙ dans laquelle X représente un groupement réactif choisi parmi un groupe hydroxyle, un groupe carboxylique, un groupe carboxamide, un groupe halogénure d'acide carboxylique, un groupe thiol, un groupe thiocarboxylique, un groupe amino, un halogène, un groupe époxy et un groupe carboxylique estérifié dont la partie ester comporte un groupe réactif, n un nombre entier positif égal ou supérieur à 1 et R est un reste comportant au moins un atome de carbone choisi parmi les groupes hydrocarbonés aliphatiques, saturés ou insaturés, substitués ou non, les groupes aromatiques substitués ou non substitués
· et d'au moins un polyépoxyde contenant dans sa molécule au moins deux groupes époxydes.

2. Composition de polymères thermoplastiques selon la revendication 1 comprenant au moins un troisième polymère P3 choisi dans le groupe formé par les polymères et les copolymères obtenu par polymérisation d'un ou plusieurs composés oléfiniques.

3. Composition de polymères thermoplastiques selon la revendication 2 dans laquelle le troisième polymère est une polyoléfine.

4. Composition de polymères thermoplastiques selon la revendication 2 ou 3 dans laquelle la polyoléfine est choisie dans le groupe formé par les polyoléfines obtenues à partir d'au moins un monomère insaturé choisi dans le groupe formé par les composés comportant une ou plusieurs insaturations et de préférence choisi dans le groupe formé par l'éthylène, le propène, les butènes et les norbornènes.

5. Composition de polymères thermoplastiques selon l'une des revendications 2 à 4 dans laquelle la polyoléfine est un polyéthylène haute densité.

6. Composition de polymères thermoplastiques selon l'une des revendications 1 à 5 dans laquelle la proportion de polyoléfine modifiée P2 est d'environ 0,01 % à environ 99 % en poids.

7. Composition de polymères thermoplastiques selon l'une des revendications 1 à 6 dans laquelle le polymère P1 comportant au moins une fonction réactive est choisi dans le groupe formé par les polyesters et les polyamides.

8. Composition de polymères thermoplastiques selon l'une des revendications 1 à 7 dans laquelle le polymère P1 comportant au moins une fonction réactive est choisi dans le groupe formé par les polyesters.

9. Composition de polymères thermoplastiques selon l'une des revendications 1 à 8 dans laquelle, dans la définition de la polyoléfine modifiée, le polyépoxyde contenant dans sa molécule au moins deux groupes époxydes est choisi dans le groupe formé par les polyépoxydes aliphatiques, les polyépoxydes cycloaliphatiques et les polyépoxydes aromatiques.

10. Composition selon la revendication 9 dans laquelle le polyépoxyde contenant dans sa molécule au moins deux groupes époxydes est choisi parmi les composés du groupe formé par le diglycidyléther du bis-phénol-A ou celui du bis-phénol-F, le triglycidyléther-isocyanurate, le triglycidyléther-cyanurate, le triglycidyl-cyanurate, le triglycidyl-isocyanurate ou les mélanges d'au moins deux de ces composés.

11. Composition selon la revendication 1 à 10 dans lequel le groupe -R- est un reste benzénique et le groupe -X est en position méta ou para par rapport à l'atome d'azote et est de préférence un groupe carboxylique.

12. Composition de polymères thermoplastiques selon l'une des revendications 1 à 11 **caractérisée en ce qu'**elle est le produit obtenu par mise en contact d'une polyoléfine à l'état fondu, d'au moins un polymère comportant au moins une fonction réactive, d'au moins un composé comportant un cycle maléimide substitué sur l'azote par un groupement réactif et d'au moins un polyépoxyde contenant dans sa molécule au moins deux groupes époxydes au sein d'un mélangeur ou dans une extrudeuse.

13. Composition de polymères thermoplastiques selon l'une des revendications 1 à 11 **caractérisée en ce qu'**elle est le produit obtenu par mise en contact dans une étape a) d'une polyoléfine à l'état fondu, d'au moins un composé comportant un cycle maléimide substitué sur l'azote par un groupement réactif et d'au moins un polyépoxyde contenant dans sa molécule au moins deux groupes époxydes au sein d'un mélangeur ou dans une extrudeuse de manière à former un produit P4, puis dans une étape b) par mise en contact au sein d'un mélangeur ou dans une extrudeuse du produit P4 obtenu à l'étape a) avec au moins un polymère à fonction réactive.

14. Composition de polymères thermoplastiques selon la revendication 13 dans laquelle le produit P4 est obtenu par mise en contact dans une étape a1) d'une polyoléfine à l'état fondu avec au moins un composé comportant un cycle maléimide substitué sur l'azote par un groupement réactif au sein d'un mélangeur ou dans une extrudeuse, puis dans une étape a2) par mise en contact au sein d'un mélangeur ou dans une extrudeuse du produit issu de l'étape a1) avec au moins un polyépoxyde contenant dans sa molécule au moins deux groupes époxydes.

15. Mélange de polymères **caractérisé en ce qu'**il comprend au moins une composition selon l'une des revendications 1 à 14, et au moins un polymère P5, identique ou différent du polymère P3, choisi dans le groupe formé par les polymères et les copolymères obtenu par polymérisation d'un ou plusieurs composés oléfiniques.

16. Mélange selon la revendication 15 dans lequel le polymère P5 est une polyoléfine.

17. Mélange selon la revendication 16 dans lequel la polyoléfine est choisie dans le groupe formé par les polyoléfines obtenues à partir d'au moins un monomère insaturé choisi dans le groupe formé par les composés comportant une ou plusieurs insaturations et de préférence choisi dans le groupe formé par l'éthylène, le propène, les butènes et les norbornènes.

18. Mélange selon la revendication 15 ou 16 dans lequel la polyoléfine est un polyéthylène haute densité.

19. Mélange selon l'une des revendications 1 à 18 **caractérisé en ce qu'**il comprend en outre au moins un polymère P6, identique ou différent du polymère P1, comportant au moins une fonction réactive.

20. Mélange selon la revendication 19 dans lequel le polymère P6 comportant au moins une fonction réactive est choisi dans le groupe formé par les polyesters, les polymères à cristaux liquides, les polycarbonates, les polyamides, les polyacétals, les alcools polyvinyliques, les copolymères éthylène-alcool polyvinylique, les copolymères d'oléfines et de dérivés vinyliques fonctionnalisés.

21. Mélange selon la revendication 19 ou 20 dans lequel le polymère P6 comportant au moins une fonction réactive est choisi dans le groupe formé par les polyesters et les polyamides.

22. Mélange selon l'une des revendications 19 à 21 dans lequel le polymère P6 comportant au moins une fonction réactive est choisi dans le groupe formé par les polyesters.

## Patentansprüche

1. Thermoplastische Polymerzusammensetzung, die wenigstens zwei unterschiedliche Polymere enthält, **dadurch gekennzeichnet, dass** sie umfasst:
- wenigstens ein Polymer P1, das wenigstens eine reaktive Funktion hat, gewählt aus der Gruppe, die gebildet wird durch die Polyester, die Flüssigkristallpolyester, die Polykarbonate, die Polyamide, die Copolyamide, die Polyurethane, die Polyazetale, die Polyvinylalkohole, die Ethylen-Vinylalkohol-Copolymere, die Copolymere von Olefinen und funktionalisierten Vinylderivaten,
- und wenigstens ein Polyolefin P2, das modifiziert ist und wenigstens einen Succinimidring enthält, der am Stickstoff durch eine reaktive Gruppe substituiert ist, wobei der Ring entweder durch die Hauptkette getragen wird oder durch die Seitenkette, wobei das modifizierte Polyolefin aus der Reaktion resultiert:
• von wenigstens einem Polyolefin,
• wenigstens einer Verbindung, die einen Maleimidring umfasst, der am Stickstoff durch eine reaktive Gruppe mit Formel -R-(X)n substituiert ist, in der X eine reaktive Gruppe darstellt, die gewählt ist unter einer Hydroxylgruppe, einer Carboxylgruppe, einer Carboxamidgruppe, einer Caboxylsäurehalogenidgruppe, einer Thiolgruppe, einer Thiocarboxylgruppe, einer Aminogruppe, einem Halogen, einer Epoxygruppe und einer esterifizierten Carboxylgruppe, deren Esterteil eine reaktiven Gruppe umfasst, n eine positive ganze Zahl gleich oder größer 1 ist und R ein Rest, der wenigstens ein Kohlenstoffatom umfasst, gewählt unter den aliphatischen Kohlenwasserstoffgruppen, gesättigt oder ungesättigt, substituiert oder nicht, den substituierten oder nicht substituierten Aromatengruppen,
• und wenigstens eines Polyepoxids, das in seinem Molekül wenigstens zwei Epoxidgruppen enthält.

2. Thermoplastische Polymerzusammensetzung nach Anspruch 1, umfassend ein drittes Polymer P3, gewählt aus der Gruppe, die gebildet wird durch die Polymere und die Copolymere, erhalten durch Polymerisation von einer oder mehreren Olefinverbindungen.

3. Thermoplastische Polymerzusammensetzung nach Anspruch 2, in der das dritte Polymer ein Polyolefin ist.

4. Thermoplastische Polymerzusammensetzung nach Anspruch 2 oder 3, in der das Polyolefin gewählt ist aus der Gruppe, die gebildet wird durch die Polyolefine, die erhalten werden aus wenigstens einem ungesättigten Monomer, gewählt aus der Gruppe, die gebildet wird durch die Verbindungen, die eine oder mehrere Unsättigungen umfassen, und vorzugsweise gewählt aus der Gruppe, die gebildet wird durch Ethylen, Propen, Butenen und Norbornenen.

5. Thermoplastische Polymerzusammensetzung nach einem der Ansprüche 2 bis 4, worin das Polyolefin ein Polyethylen hoher Dichte ist.

6. Thermoplastische Polymerzusammensetzung nach einem der Ansprüche 1 bis 5, bei dem der Anteil an modifizierten Polyolefin P2 etwa 0,01 bis etwa 99 Gew.-% beträgt.

7. Thermoplastische Polymerzusammensetzung nach einem der Ansprüche 1 bis 6, bei der das Polymer P1, welches wenigstens eine reaktive Funktion umfasst, gewählt ist aus der Gruppe, die gebildet wird durch die Polyester und Polyamide.

8. Thermoplastische Polymerzusammensetzung nach einem der Ansprüche 1 bis 7, bei der das Polymer P1, das wenigstens eine reaktive Funktion umfasst, gewählt ist aus der Gruppe, die gebildet wird durch die Polyester.

9. Thermoplastische Polymerzusammensetzung nach einem der Ansprüche 1 bis 8, bei der in der Definition des modifizierten Polyolefins, das Polyepoxid, das in seinem Molekül wenigstens zwei Epoxidgruppen enthält, gewählt ist aus der Gruppe, die gebildet wird durch die aliphatischen Polyepoxide, die zykloaliphatischen Polyepoxide und die aromatischen Polyepoxide.

10. Zusammensetzung nach Anspruch 9, bei der das Polyepoxid, das in seinem Molekül wenigstens zwei Epoxidgruppen enthält, gewählt wird aus den Verbindungen der Gruppe, die gebildet wird durch Diglycidylether von Bisphenol A oder jenem von Bisphenol F, Triglycidyletherisocyanurat, Triglycidylethercyanurat, Triglycidylcyanurat, Triglycidylisocyanurat, oder Gemischen von wenigstens zweien dieser Verbindungen.

11. Zusammensetzung nach einem der Ansprüche 1 bis 10, bei der die Gruppe - R- ein Benzolrest und die Gruppe -X in meta- oder para-Position im Verhältnis zum Stickstoffatom steht und vorzugsweise eine Carboxylgruppe ist.

12. Thermoplastische Polymerzusammensetzung nach einem der Ansprüche 1 bis 11, **dadurch gekennzeichnet, dass** sie das Produkt ist, das erhalten wird durch Kontaktieren von einem Polyolefin in geschmolzenem Zustand, von wenigstens einem Polymer, das wenigstens eine reaktive Funktion hat, wenigstens einer Verbindung, die einen Maleimidring umfasst, der am Stickstoff durch eine reaktive Gruppe substituiert ist und wenigstens einem Polyepoxid, das in seinem Molekül wenigstens zwei Epoxidgruppen enthält, in einem Mischer oder einem Extrudator.

13. Thermoplastische Polymerzusammensetzung nach einem der Ansprüche 1 bis 11, **dadurch gekennzeichnet, dass** sie das Produkt ist, das erhalten wird durch Kontaktieren in einer Stufe a) von einem Polyolefin in geschmolzenem Zustand, wenigstens einer Verbindung, die einen Maleimidring umfasst, der am Stickstoff durch eine reaktive Gruppe substituiert ist, und wenigstens einem Polyepoxid, das in seinem Molekül wenigstens zwei Epoxidgruppen enthält, in einem Mischer oder in einem Extrudator, derart, dass ein Produkt P4 gebildet wird und dann in einer Stufe b) durch Kontaktieren in einem Mischer oder in einem Extrudator des Produkts P4, das bei Stufe a) erhalten wird, mit einem Polymer mit reaktiver Funktion.

14. Thermoplastische Polymerzusammensetzung nach Anspruch 13, in der das Produkt P4 erhalten wird durch Kontaktieren der Stufe a1) von einem Polyolefin in geschmolzenen Zustand mit wenigstens einer Verbindung, die einen Maleimidring umfasst, der am Stickstoff durch eine reaktive Gruppe substituiert ist, in einem Mischer oder in einem Extrudator und dann in einer Stufe a2) durch Kontaktieren in einem Mischer oder einem Extrudator des Produkts aus Stufe a1) mit wenigstens einem Polyepoxid, das in seinem Molekül wenigstens zwei Epoxidgruppen enthält.

15. Polymergemisch, **dadurch gekennzeichnet, dass** es wenigstens eine Zusammensetzung umfasst gemäß einem der Ansprüche 1 bis 14 und wenigstens ein Polymer P5, identisch oder verschieden vom Polymer P3, gewählt aus der Gruppe, die gebildet wird durch die Polymere und Copolymere, erhalten durch Polymerisation von einer oder mehreren Olefinverbindungen.

16. Gemisch nach Anspruch 15, bei dem das Polymer P5 ein Polyolefin ist.

17. Gemisch nach Anspruch 16, bei dem das Polyolefin gewählt ist aus der Gruppe, die gebildet wird durch die Polyolefine, die erhalten werden aus wenigstens einem ungesättigten Monomer, gewählt aus der Gruppe, die gebildet wird durch die Verbindungen, die eine oder mehrere Unsättigungen aufweisen, und vorzugsweise gewählt aus der Gruppe, die gebildet wird durch Ethylen, Propen, Butenen und Norbornenen.

18. Gemisch nach Anspruch 15 oder 16, bei dem das Polyolefin ein Polyethylen hoher Dichte ist.

19. Gemisch nach einem der Ansprüche 1 bis 18, **dadurch gekennzeichnet, dass** es außerdem wenigstens ein Polymer P6, identisch oder verschieden vom Polymer P1 umfasst, welches wenigstens eine reaktive Funktion umfasst.

20. Gemisch nach Anspruch 19, bei dem das Polymer P6, welches wenigstens eine reaktive Funktion umfasst, gewählt wird aus der Gruppe, die gebildet wird durch die Polyester, die Flüssigkristallpolymere, die Polykarbonate, die Polyamide, die Polyazetale, die Polyvinylalkohole, die Ethylen-Polyvinylalkohol-Copolymere, die Copolymere von Olefinen und von funktionalisierten Vinylderivaten.

21. Gemisch nach Anspruch 19 oder 20, bei dem das Polymer P6, das wenigstens eine reaktive Funktion umfasst, gewählt wird aus der Gruppe, die gebildet wird durch die Polyester und die Polyamide.

22. Gemisch nach einem der Ansprüche 19 bis 21, bei dem das Polymer P6, das wenigstens eine reaktive Funktion umfasst, gewählt wird aus der Gruppe, die gebildet wird durch die Polyester.

## Claims

1. A thermoplastic polymer composition containing at least two distinct polymers, **characterized in that** it comprises
- at least one polymer P1 containing at least one reactive function and selected from the group formed by polyesters, liquid crystal polymers, polycarbonates, polyamides, copolyamides, polyurethanes, polyacetals, polyvinyl alcohols, ethylene-vinyl alcohol copolymers, and copolymers of olefins and functionalised vinyl derivatives
- and at least one modified polyolefin P2 containing at least one succinimide ring substituted on the nitrogen by a reactive group, the ring being carried either by the main chain or by a side chain, said modified polyolefin resulting from the reaction:
- of at least one polyolefin,
- at least one compound containing a maleimide ring substituted on the nitrogen by a reactive group with formula -R-(X)ₙ, where X represents a reactive group,selected from a hydroxyl group, a carboxylic group, a carboxamide group, a carboxylic acid halide group, a thiol group, a thiocarboxylic group, an amino group, a halogen, an epoxy group, an esterified carboxylic group in which the ester portion comprises a reactive group, n is a positive whole number equal to 1 or more and R is a residue containing at least one carbon atom selected from aliphatic, saturated or unsaturated, substituted or non substituted hydrocarbon groups, and substituted or non substituted aromatic groups
- and at least one polyepoxide containing at least two epoxy groups in its molecule.

2. A thermoplastic polymer composition according to claim 1, comprising at least one third polymer P3 selected from the group formed by polymers and copolymers obtained by polymerisation of one or more olefinic compounds.

3. A thermoplastic polymer composition according to claim 2, in which the third polymer is a polyolefin.

4. A thermoplastic polymer composition according to claim 2 or claim 3, in which the polyolefin is selected from the group formed by polyolefins obtained from at least one unsaturated monomer selected from the group formed by compounds containing one or more unsaturated bonds, preferably selected from the group formed by ethylene, propene, butenes and norbomenes.

5. A thermoplastic polymer composition according to any one of claims 2 to 4, in which the polyolefin is a high density polyethylene.

6. A thermoplastic polymer composition according to any one of claims 1 to 5, in which the proportion of modified polyolefin P2 is about 0.01% to about 99% by weight.

7. A thermoplastic polymer composition according to any one of claims 1 to 6, in which polymer P1 containing at least one reactive function is selected from the group formed by polyesters and polyamides.

8. A thermoplastic polymer composition according to any one of claims 1 to 7, in which polymer P1 containing at least one reactive function is selected from the group formed by polyesters.

9. A thermoplastic polymer composition according to any one of claims 1 to 8, in which, in the definition of the modified polyolefin, the polyepoxide containing at least two epoxy groups in its molecule is selected from the group formed by aliphatic polyepoxides, cycloaliphatic polyepoxides and aromatic polyepoxides.

10. A composition according to claim 9, in which the polyepoxide containing at least two epoxy groups in its molecule is selected among the compounds of the group formed by the diglycidylether of bis-phenol-A or that of bis-phenol-F, triglycidylether isocyanurate, triglycidylether cyanurate, triglycidyl cyanurate, triglycidyl isocyanurate or mixtures of at least two of these compounds.

11. A composition according to any one of claims 1 to 10, in which group -R-is a benzene residue and group -X is in the position meta or para to the nitrogen atom, and is preferably a carboxylic group.

12. A thermoplastic polymer composition according to any one of claims 1 to 11, **characterized in that** it is the product obtained by bringing a molten polyolefin into contact in a mixer or an extruder with at least one polymer containing at least one reactive function, and with at least one compound containing a maleimide ring substituted on the nitrogen by a reactive group and with at least one polyepoxide containing at least two epoxy groups in its molecule.

13. A thermoplastic polymer composition according to any one of claims 1 to 11, **characterized in that** it is the product obtained by bringing a molten polyolefin in a step a) into contact with at least one compound containing a maleimide ring substituted on the nitrogen by a reactive group and with at least one polyepoxide containing at least two epoxy groups in its molecule in a mixer or an extruder to form a product P4, then in a step b) bringing the product P4 obtained from step a) into contact with at least one polymer containing a reactive function in a mixer or an extruder.

14. A thermoplastic polymer composition according to claim 13, in which product P4 is obtained by bringing a molten polyolefin into contact, in a step a1), with at least one compound containing a maleimide ring substituted on the nitrogen by a reactive group in a mixer or an extruder then, in a step a2), bringing the product from step a1) into contact with at least one polyepoxide containing at least two epoxy groups in its molecule, in a mixer or an extruder.

15. A mixture of polymers, **characterized in that** it comprises at least one composition according to any one of claims 1 to 14, and at least one polymer P5, identical to or different from polymer P3, selected from the group formed by polymers and copolymers obtained by polymerisation of one or more olefinic compounds.

16. A mixture according to claim 15, in which polymer P5 is a polyolefin.

17. A mixture according to claim 16, in which the polyolefin is selected from the group formed by polyolefins obtained from at least one unsaturated monomer selected from the group formed by compounds containing one or more unsaturated bonds, preferably selected from the group formed by ethylene, propene, butenes and norbornenes.

18. A mixture according to claim 15 or 16, in which the polyolefin is a high density polyolefin.

19. A mixture according to any one of claims 1 to 18, **characterized in that** it further comprises at least one polymer P6, identical to or different from polymer P1, containing at least one reactive function.

20. A mixture according to claim 19, in which polymer P6 containing at least one reactive function is selected from the group formed by polyesters, liquid crystal polymers, polycarbonates, polyamides, polyacetals, polyvinyl alcohols, ethylene-polyvinyl alcohol copolymers, and copolymers of olefins and functionalised vinyl derivatives.

21. A mixture according to claim 19 or 20, in which polymer P6 containing at least one reactive function is selected from the group formed by polyesters and polyamides.

22. A mixture according to any one of claims 19 to 21, in which polymer P6 containing at least one reactive function is selected from the group formed by polyesters.
